# FASCICULE DE BREVET EUROPEEN

(11) **EP 2 834 119 B1**
(45) Date de publication et mention de la délivrance du brevet: **17.01.2018**
(21) Numéro de dépôt: 13719980.8
(22) Date de dépôt: 04.04.2013
(51) Int. Cl.: B60W 50/035, G05D 1/00

(54) **SYSTEME DE COMMANDE DE VEHICULE EN MODE AUTONOME ET VEHICULE COMPRENANT UN TEL SYSTEME DE COMMANDE.**
FAHRZEUGSTEUERUNGSSYSTEM MIT AUTONOMEM MODUS UND FAHRZEUG MIT SOLCH EINEM STEUERSYSTEM
AUTONOMOUS MODE VEHICLE CONTROL SYSTEM AND VEHICLE COMPRISING SUCH A CONTROL SYSTEM

(30) Priorité: 05.04.2012 FR 1253128
(43) Date de publication de la demande: 11.02.2015
(73) Titulaire: Renault S.A.S., 92100 Boulogne-Billancourt (FR)
(72) Inventeur: MINOIU-ENACHE, Nicoleta, F-78000 Versailles (FR)
(86) Numéro de dépôt international: PCT/FR2013/050739
(87) Numéro de publication internationale: WO 2013/150244

(56) Documents cités:
- EP-A1- 1 143 314
- DE-A1- 10 357 922
- FR-A3- 2 927 596
- US-A- 5 469 356
- US-B1- 8 078 349

## Description

L'invention concerne un système de commande de véhicule en mode autonome et un véhicule comprenant un tel système de commande.

L'invention est notamment applicable à un véhicule de série habituellement prévu pour fonctionner conventionnellement en mode manuel, en d'autres termes pouvant être conduit par un être humain. L'invention permet de construire des véhicules en série avec un deuxième mode de fonctionnement dit autonome dans lequel le véhicule, tel un robot est capable d'évoluer sans conducteur humain. Ces deux modes de fonctionnement permettent la réalisation de nombreux services comme par exemple un service de parking automatisé, un service voiturier, un service de recharge automatique de batterie pour un véhicule à propulsion électrique voire de remplissage en carburant pour un véhicule à propulsion thermique lorsque c'est possible, un service de déplacement sans conducteur de personnes à mobilité réduite, un service de rééquilibrage de flottes de véhicules de location par la mise en peloton.

De nombreux pré-requis techniques sont présents aujourd'hui pour mettre en service des véhicules autonomes avec un haut niveau d'automatisation ou bimodaux, c'est-à-dire autonomes et manuels. Cependant, un usage public ou une commercialisation de tels véhicules reste difficile notamment en raison des contraintes de sûreté de fonctionnement et de prix.

Parmi les connaissances de l'état antérieur de la technique, le document US5469356 divulgue un système de contrôle automatique d'une part de fonctionnement autonome de véhicule en réponse à une consigne de vitesse et un angle de braquage en provenance d'un navigateur, et d'autre part de fonctionnement manuel. Le système de contrôle reçoit une information d'alternance entre mode automatique et mode manuel en provenance d'un bouton situé dans la cabine et d'un bouton situé à l'extérieur de la cabine de conduite du véhicule.

Le document US8078349 divulgue un véhicule autonome comprenant un module de contrôle pour mettre le véhicule en mode autonome en exécutant une instruction de passage en mode autonome basée sur une donnée de référence associée à un détecteur de repère de localisation du véhicule.

Aucun de ces deux documents connus ne prévoit de comportement à mettre en oeuvre en cas de situation imprévue. Cette absence de prise en compte de situation imprévue pose un problème de sécurité et un problème de sureté de fonctionnement lorsque le véhicule est en mode de marche autonome.

L'invention a pour but de répondre aux problèmes posés par l'état antérieur de la technique, notamment en termes de sécurité en cas de situation imprévue.

Dans ce but, l'invention a pour objet un système de commande d'un véhicule comportant :
- des organes de commande humaine générant des signaux de pilotage manuel d'actionneurs du véhicule ;
- un module de commande automatique générant des signaux de pilotage autonome des actionneurs du véhicule ;
- un module de commutation agencé pour sélectionner les signaux de pilotage manuel dans un mode de fonctionnement manuel et les signaux de pilotage autonome dans un mode de fonctionnement autonome.

Le système de commande est remarquable en ce que le module de commande automatique comprend :
- un bloc d'élaboration automatique d'au moins un signal de pilotage autonome calculé ;
- un bloc de sécurisation agencé pour transmettre au module de commutation au moins le signal de pilotage autonome calculé dans un cas de fonctionnement autonome normal et un signal de pilotage autonome d'urgence dans un cas de fonctionnement autonome anormal.

Avantageusement, le module de commande automatique comporte un bloc de supervision qui héberge une machine globale à états finis comprenant un premier état global associé au mode de fonctionnement manuel et un deuxième état global associé au mode de fonctionnement autonome de façon à envoyer au module de commutation au moins un signal de sélection des signaux de pilotage manuel et autonome.

Particulièrement, la machine globale à états finis comprend un troisième état global associé au cas de fonctionnement autonome anormal de façon à envoyer au bloc de sécurisation au moins un signal de freinage d'urgence.

Particulièrement aussi, le module de commande automatique comporte un bloc de diagnostic agencé pour détecter tout événement associé à un cas de fonctionnement autonome anormal et pour envoyer au moins un signal au bloc de supervision représentatif des cas de fonctionnement autonome normal et anormal.

De manière particulièrement avantageuse, le bloc d'élaboration automatique comporte un sous-bloc de contrôle/commande qui héberge une machine locale à états finis comprenant un premier état local associé à un démarrage autonome et un deuxième état local associé à une immobilisation autonome.

De préférence, le système de commande comporte un module de navigation et/ou de localisation agencé pour envoyer en temps réel au bloc d'élaboration automatique, des coordonnées de trajectoire exprimées dans un repère local au véhicule.

L'invention a aussi pour objet un procédé de commande d'un véhicule comportant :
- une ou plusieurs étapes de mode manuel dans laquelle ou lesquelles des organes de commande humaine génèrent des signaux de pilotage manuel d'actionneurs du véhicule ;
- une ou plusieurs étapes de mode autonome dans laquelle ou lesquelles, sont générés des signaux de pilotage autonome qui sont commutés vers lesdits actionneurs du véhicule à la place des signaux de pilotage manuel.

Le procédé est remarquable en ce que les étapes de mode autonome comprennent :
- une étape de mode autonome normal exécutée dans un cas de fonctionnement autonome normal et dans laquelle les signaux de pilotage autonome comprennent au moins un signal de pilotage autonome calculé ;
- une étape de mode autonome d'urgence exécutée dans un cas de fonctionnement autonome anormal et dans laquelle les signaux de pilotage autonome comprennent au moins un signal de pilotage autonome d'urgence.

De manière avantageuse, le procédé de commande comprend :
- au moins une première étape pour effectuer un démarrage autonome ;
- au moins une deuxième étape pour effectuer une immobilisation autonome.

L'invention a encore pour objet un produit programme d'ordinateur qui comprend des instructions pour mettre en oeuvre le procédé selon l'invention lorsqu'elles sont exécutées par un ordinateur.

L'invention a enfin pour objet un véhicule automobile qui comprend un système de commande selon l'invention.

D'autres caractéristiques et avantages apparaîtront à la lecture de la description qui suit, en référence aux dessins annexés dans lesquels :
- la figure 1 est un schéma de système conforme à l'invention,
- la figure 2 montre un module de commande conforme à l'invention,
- les figures 3 et 4 montrent chacune une machine à états finis à l'intérieur du module de commande représenté en figure 2.

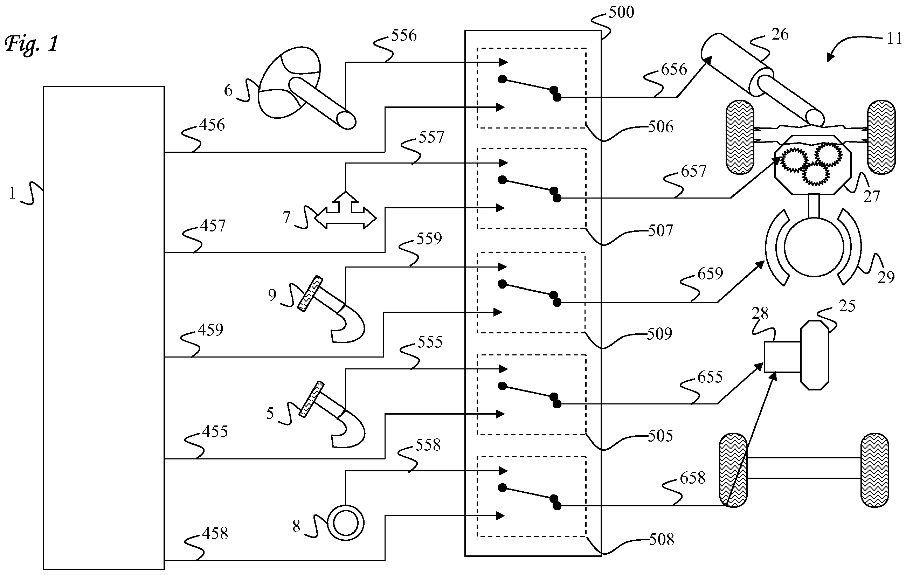

La figure 1 illustre un système de commande d'un véhicule 11 conforme à l'invention.

On y observe un ensemble d'organes de commande humaine comprenant un volant de direction 6, un levier de vitesse 7 à au moins trois positions recul, neutre, déplacement, une pédale 9 d'accélérateur, une pédale 5 de frein et un bouton 8 de frein de parking. Chacun des organes de commande humaine ici représentés à titre purement illustratif et nullement exhaustif génère un ou plusieurs signaux de pilotage manuel d'au moins l'un de plusieurs actionneurs 25 à 29 du véhicule 11.

Le volant de direction 6 est muni de manière connue d'un capteur de rotation (non représenté) pour générer un signal de pilotage manuel 556 destiné à un servomoteur 26 de direction assistée qui braque les roues en fonction d'une référence de couple de braquage donné par le signal de pilotage manuel 556 sous forme numérique ou analogique.

La pédale 9 d'accélérateur est munie de manière connue d'un capteur de course (non représenté) pour générer un signal de pilotage manuel 559 de type continu sous forme numérique ou analogique destiné à un groupe motopropulseur 29. Dans un exemple de groupe motopropulseur thermique, le signal de pilotage manuel 559 est plus précisément destiné au dispositif d'injection électronique. Dans un exemple de groupe motopropulseur électrique, le signal de pilotage manuel 559 est plus précisément destiné au dispositif de commande électronique d'alimentation en puissance électrique.

Le levier de vitesse 7 est muni de manière connue d'un capteur de position (non représenté) pour générer un signal de pilotage manuel 557 destiné à un dispositif de couplage mécanique 27. Dans l'exemple de groupe motopropulseur thermique, le dispositif de couplage mécanique 27 est à titre purement illustratif une boîte de vitesse automatique ou au moins robotisée. Dans l'exemple de groupe motopropulseur électrique, le dispositif de couplage mécanique 27 est à titre purement illustratif un simple réducteur à engrenage qui alors ne reçoit pas le signal 557. Le signal de pilotage manuel 557 est envoyé à un calculateur EVC (acronyme de electrical vehicle control en anglais) qui gère le moteur électrique de façon adéquate de manière connue en soi. Le signal de pilotage manuel 557 est typiquement à valeurs discrètes R, N, D, chacune correspondant à l'une des au moins trois positions recul, neutre, déplacement.

La pédale 5 de frein est munie de manière connue d'un capteur de course (non représenté) pour générer un signal de pilotage manuel 555 de type continu sous forme numérique ou analogique destiné à communiquer une valeur de pression de serrage à dispositif de freinage hydraulique 25.

Le bouton 8 de frein de parking génère un signal de pilotage manuel 558 de type discret typiquement binaire destiné à communiquer un ordre de serrage à dispositif de frein de parking 28.

Un module de commande automatique 1 génère des signaux de pilotage autonome 455, 456, 457, 458, 459 respectivement de même nature que les signaux de pilotage manuel 555, 556, 557, 558, 559 pour piloter les actionneurs 25, 26, 27, 28, 29 du véhicule.

Un module de commutation 500 comprend un commutateur 505, respectivement 506, 507, 508, 509 pour commuter le signal de pilotage manuel 555, respectivement 556, 557, 558, 559 sur un signal de pilotage bimodal 655, respectivement 656, 657, 658, 659 en fonctionnement manuel et pour commuter le signal de pilotage autonome 455, respectivement 456, 457, 458, 459 sur le signal de pilotage bimodal 655, respectivement 656, 657, 658, 659 en fonctionnement autonome. Chacun des signaux de pilotage bimodal 655, 656, 657, 658, 659 est connecté à l'actionneur 25, 26, 27, 28, 29 correspondant. De préférence à des commutateurs manuels qui permettent déjà d'agencer le module 500 pour sélectionner manuellement les signaux de pilotage manuel dans un mode de fonctionnement manuel et les signaux de pilotage autonome dans un mode de fonctionnement autonome, des commutateurs commandés tels que des relais ou des transistors permettent une commutation contrôlée du mode de fonctionnement manuel au mode de fonctionnement autonome et réciproquement. Lorsque les signaux 455 à 459 sont transmis au module de commutation 500 par le bus CAN dédié, les commutateurs 505 à 509 sont réalisés par un mécanisme d'adressage informatique, un premier ensemble de cellules mémoires étant affecté aux signaux 555 à 559, un deuxième ensemble de cellules mémoires étant affecté aux signaux 455 à 459 et un troisième ensemble de cellules mémoires étant affecté aux signaux 655 à 659.

Le module de commutation 500 est avantageusement un dispositif électronique de type calculateur ou carte électronique qui, par des commandes électroniques et filaires, programmé ou câblé pour exécuter des commutations entre les commandes pouvant venir du conducteur et les commandes venant d'un calculateur qui héberge le module de commande automatique 1 et vice-versa. Ces commandes sont destinées aux actionneurs de la voiture comprenant notamment ceux relatifs à la colonne de direction 26, au frein 25, à l'accélération 29, au frein de parking assisté 28, au levier de vitesse 7 muni dans ce cas d'un servomoteur et à divers accessoires non représentés.

Ainsi le module de commutation 500 a pour effet d'imposer aux actionneurs de la voiture d'avoir un certain comportement quand les commandes venant du calculateur qui héberge le module 1, sont actives.

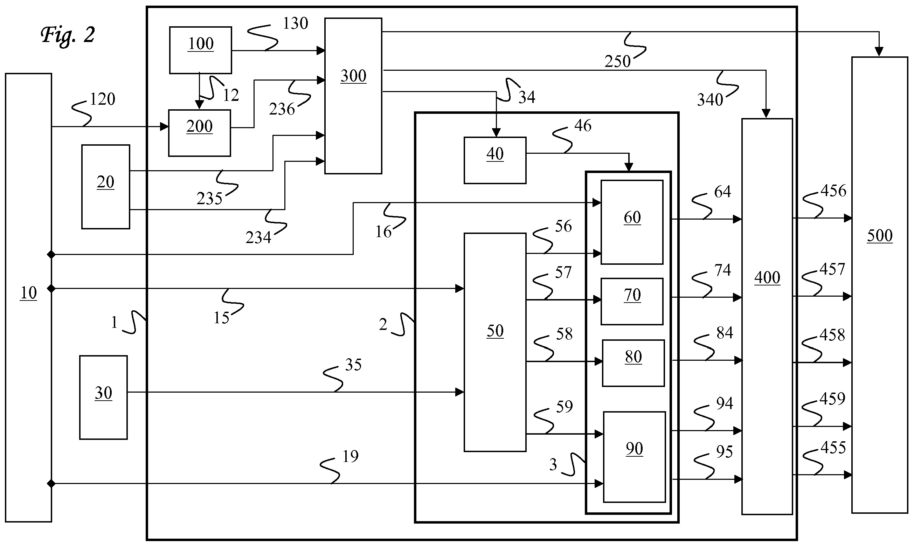

Les échanges de signaux entre les différents modules sont représentés sous forme filaire sur les figures 1 et 2. Cependant il est intéressant de dédier un bus de communication, par exemple de type CAN ou autre, spécifiquement dédié à la communication entres différents calculateurs ou dispositifs électroniques qui hébergent le module de commande automatique 1, le module de commutation 500 et d'autres modules de mis en oeuvre du fonctionnement autonome du véhicule automobile tels que par exemple un module 30 de navigation/localisation.

Ainsi le bus de communication dédié n'interfère pas avec le bus de communication véhicule 10 usuel qui ne nécessite alors pas d'être modifié pour porter l'invention sur un véhicule standard. Le bus de communication véhicule 10 permet par ailleurs au module de commande automatique 1, hébergé dans un calculateur ou dans tout autre dispositif électronique, d'accéder en lecture à différentes données du véhicule qui circulent de manière habituelle sur le bus 10, notamment la vitesse effective du véhicule, l'angle de braquage effectif des roues.

Le module de commande automatique 1 est décrit maintenant plus en détails en référence à la figure 2.

Un bloc 2 d'élaboration automatique de signaux de pilotage autonome calculés 64, 74, 84, 94, 95, comprend au moins un composant 60, 70, 80, 90 de calcul d'un signal de pilotage autonome.

Le composant 60 est agencé pour calculer le signal 64 qui permet à l'actionneur 26 de braquer les roues directrices en fonction d'une consigne d'angle, par exemple d'une consigne d'angle de rotation du volant 6. Pour calculer le signal 64, le composant 60 reçoit un signal 56 de consigne d'angle en provenance d'un sous-bloc 50 de contrôle-commande de trajectoire et un signal 16 de mesure d'angle volant par un capteur d'angle existant au niveau de la colonne de direction 6, 26 et envoyé sur le bus CAN 10, ou d'un capteur d'angle ajouté sur la colonne de direction 6,26. Le composant 60 calcule alors de manière connue en termes de régulation, un couple de braquage qui, appliqué à l'actionneur 26, annule une erreur d'angle entre les valeurs des signaux 16 et 56. Le couple de braquage calculé en temps réel est alors celui qui permet d'atteindre et de maintenir un angle de braquage souhaité des roues. La valeur du couple calculé est reportée en temps réel dans le signal de pilotage 64. Lorsque la colonne de direction 6, 26, comprend un asservissement de rotation sur une consigne d'angle, le composant reporte en temps réel une valeur d'angle dans le signal de pilotage 64 qui est dans ce cas calculée à partir du signal 56 sans avoir à lire le signal 16 sur le bus 10.

Le composant 70 est agencé pour calculer le signal 74 qui permet à l'actionneur 27 de se positionner de manière à transmettre ou ne pas transmettre une puissance du groupe motopropulseur 29 aux roues de façon à faire progresser le véhicule en marche arrière, en marche avant ou en roue libre. Le signal 74 est par exemple un signal ternaire dont chacune des trois valeurs R, N, D est calculée dans un ordre logique à partir d'un signal 57 en provenance du sous-bloc 50 de contrôle-commande de trajectoire.

Le composant 80 est agencé pour calculer le signal 84 qui permet à l'actionneur 28 de serrer et de desserrer le frein à main. Le signal 84 est par exemple un signal binaire calculé logiquement à partir d'un signal 58 en provenance du sous-bloc 50 de contrôle-commande de trajectoire.

Le composant 90 est agencé pour calculer un signal 94 qui permet à l'actionneur 29 d'accélérer et de décélérer le véhicule et un signal 95 qui permet à l'actionneur 25 de freiner le véhicule. Le composant 90 reçoit un signal 59 qui donne en temps réel une valeur de consigne de vitesse v* en provenance du sous-bloc 50 de contrôle-commande de trajectoire. Le composant 90 lit d'autre part sur le bus CAN 10 du véhicule une valeur de vitesse effective mesurée en temps réel et disponible dans un signal 19 sur le bus CAN du véhicule. Le composant 90 calcule en temps réel un couple d'accélération et de freinage pour atteindre la consigne de vitesse v*. Le composant 90 calcule également en temps réel un signal 95 de freinage hydraulique des roues, par exemple dès que la vitesse du véhicule est nulle pour mettre en sécurité le véhicule malgré une pente possible.

Le sous-bloc 50 reçoit un signal 35 en provenance du module 30 de navigation/localisation. Le signal 35 contient une consigne de trajectoire, par exemple sous forme vectorielle à trois composantes comprenant deux coordonnées spatiales x*, y* et une vitesse v*. Les consignes de coordonnées spatiales x*, y* et de vitesse v* sont exprimées dans un repère lié au véhicule. Le sous-bloc 50 calcule en temps réel l'angle des roues et la vitesse nécessaire pour suivre la consigne de trajectoire reçue du module 30. Le sous-bloc 50 accède aussi en lecture au bus 10 pour recevoir dans une trame de message ou de signal 15 des données du véhicule nécessaires ou utiles pour calculer les signaux 56 à 59. A titre purement illustratif et non exhaustif, on peut citer les données relatives au diamètre des roues, à une détection d'obstacle, à un rapport de pente de la chaussée, au rapport de boîte de vitesse dans le cas particulier d'un moteur thermique ou au flux d'excitation dans le cas d'un moteur électrique.

Le module 30 de navigation/localisation est un dispositif électronique extérieur au module 1, de préférence un calculateur qui contient un programme de calcul de la consigne de trajectoire du véhicule et qui communique avec le module 1 au moyen du bus CAN dédié. Pour calculer la consigne de trajectoire du véhicule, le module 30 de navigation/localisation dispose de manière connue par ailleurs, d'une cartographie de l'environnement du véhicule, d'un mécanisme eudiométrique de modélisation en temps réel de l'évolution de la position du véhicule, de capteurs et/ou d'une ou plusieurs caméras.

Les composants 60, 70, 80, 90 sont regroupés dans un sous-bloc 3 de calcul de valeurs de signaux de pilotage autonome du véhicule. Le sous-bloc 3 est supervisé par un sous-bloc 40 de contrôle/commande au moyen d'un ou plusieurs signaux 46 de séquençage des calculs.

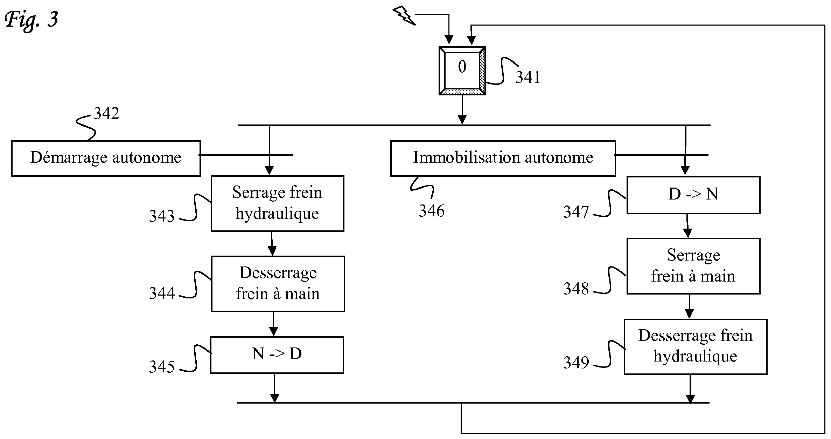

Le sous-bloc 40 de contrôle/commande héberge une machine locale d'états finis expliquée à présent en référence à la figure 3.

Une étape initiale 341 est activée par mise sous tension du module 1.

Une transition 342 est validée par une combinaison de deux conditions. Une première condition est liée à un signal 34 en provenance d'un bloc de supervision 300 lorsque sa valeur indique une instruction de démarrage autonome, notamment après un arrêt prolongé. Une deuxième condition est liée à une valeur non nulle de la consigne de vitesse v* en provenance du module 30 de navigation/localisation.

Une validation de la transition 342 active une succession de trois étapes 343 à 345.

L'étape 343 consiste essentiellement à ordonner un serrage de frein hydraulique au sous-bloc 3 de calcul de valeurs de signaux de pilotage autonome du véhicule.

L'étape 344 consiste essentiellement à ordonner un desserrage de frein à main au sous-bloc 3 de calcul de valeurs de signaux de pilotage autonome du véhicule.

L'étape 345 consiste essentiellement à ordonner un passage de l'actionneur 27 de la position neutre N à la position de déplacement D au sous-bloc 3 de calcul de valeurs de signaux de pilotage autonome du véhicule.

La machine locale d'états finis revient ensuite à l'étape initiale 341, laissant la main au sous-bloc 3 de calcul de valeurs de signaux de pilotage autonome pour accélérer le véhicule et lui faire suivre la consigne de trajectoire. Cet enchainement garantit que le véhicule est tout le temps dans une situation sûre et ne se déplace pas sans autorisation, à cause de la pente par exemple.

Une transition 346 est validée par une combinaison de deux autres conditions. Une première autre condition est liée au signal 34 en provenance du bloc de supervision 300 lorsque sa valeur indique une instruction d'immobilisation autonome ou de mise en sécurité du véhicule, notamment en vue d'un arrêt prolongé. Une deuxième autre condition est liée à une valeur nulle de la consigne de vitesse v* en provenance du module 30 de navigation/localisation et à l'état arrêté du véhicule (vitesse mesurée nulle).

Une validation de la transition 346 active une succession de trois étapes 347 à 349.

L'étape 347 consiste essentiellement à ordonner un passage de l'actionneur 27 de la position de déplacement D à la position neutre N au sous-bloc 3 de calcul de valeurs de signaux de pilotage autonome du véhicule.

L'étape 348 consiste essentiellement à ordonner un serrage de frein à main au sous-bloc 3 de calcul de valeurs de signaux de pilotage autonome du véhicule.

L'étape 349 consiste essentiellement à ordonner un desserrage de frein hydraulique au sous-bloc 3 de calcul de valeurs de signaux de pilotage autonome du véhicule.

La machine locale d'états finis revient ensuite à l'étape initiale 341, en attente d'une nouvelle instruction de démarrage.

Cet enchainement garantit encore que le véhicule est tout le temps dans une situation sûre et ne se déplace pas sans autorisation, par exemple à cause de la pente.

Le bloc 2 envoie les signaux de pilotage autonome calculés 64, 74, 84, 94, 95 à un bloc de sécurisation 400 que nous décrivons à présent.

Le bloc de sécurisation 400 est supervisé par le bloc de supervision au moyen d'un ou plusieurs signaux 340 de sélection de signaux de pilotage autonome à transmettre au module de commutation 500.

Lorsqu'une valeur de signal 340 de sélection indique un arrêt d'urgence automatique, généralement lié à un cas de fonctionnement autonome anormal, le bloc de sécurisation 400 transmet au module de commutation 500 un ou plusieurs signaux de pilotage autonome 455 à 459 qui retranscrivent chacun un signal de pilotage autonome d'urgence.

Le signal de pilotage autonome 456 retranscrit le signal 64 tel qu'il est délivré par le composant 60 de façon à maintenir la valeur d'angle de braquage tel qu'il résulte de la navigation.

Le signal de pilotage autonome 457 retranscrit un forçage à la position neutre N de l'actionneur 27 de manière à ne pas transmettre de puissance du groupe motopropulseur 29 aux roues.

Le signal de pilotage autonome 458 retranscrit un forçage contenu par exemple en mémoire qui impose à l'actionneur 28 de serrer le frein à main.

Les signaux de pilotage autonome 459, 455 retranscrivent un forçage de valeurs contenues par exemple en mémoire qui reproduisent une valeur nulle d'accélération du véhicule et qui imposent à l'actionneur 25 de freiner le véhicule.

Lorsque la valeur de signal 340 de sélection n'indique pas un arrêt d'urgence automatique qui est représentatif d'un cas de fonctionnement autonome anormal mais un ordre de marche qui est représentatif d'un cas de fonctionnement autonome normal, le bloc de sécurisation 400 transmet au module de commutation 500 les signaux de pilotage autonome 456, 457, 458, 459, 455 qui retranscrivent respectivement les signaux de pilotage autonome 64, 74, 84, 94, 95 en provenance du bloc 2.

Ainsi, le bloc de sécurisation 400 est agencé pour transmettre au module de commutation 500 les signaux de pilotage autonome calculés dans le cas de fonctionnement autonome normal et les signaux de pilotage autonome d'urgence dans le cas de fonctionnement autonome anormal.

On remarquera que le bloc de sécurisation 400 est le gardien des sorties du module 1. Toutes les sorties passent par le bloc de sécurisation 400 avant d'être envoyées, à titre d'exemple par le bus CAN dédié au module de commutation 500.

A la première fonction du bloc de sécurisation 400 décrite ci-dessus peut s'ajouter une deuxième fonction qui porte sur une séparation complète des modes de fonctionnement manuel relatif à la conduite manuelle et de fonctionnement autonome relatif à la conduite automatique.

Lorsque la valeur de signal 340 de sélection n'indique ni un arrêt d'urgence automatique, ni un ordre de marche en mode autonome, les signaux 459, 455, 456, 458, 457 relatifs respectivement aux sorties pour les actionneurs d'accélération, freinage, direction, frein et RND sont positionnés sur des valeurs non-définies, en d'autres termes sur des valeurs non interprétables par les actionneurs, par exemple une valeur hors intervalle de fonctionnement de l'actionneur. De cette façon, le module de commutation 500 ne peut pas se tromper et commander un fonctionnement automatique en dehors des cas prévus. En d'autres termes, même si le module de commutation reproduit par erreur l'un des signaux 455 à 459 sur l'un des signaux 655 à 659 alors que le module 1 n'est pas en mode de fonctionnement autonome, la valeur du signal ainsi incompatible avec le fonctionnement de l'actionneur respectif, est détectée pour être invalidée ou de préférence pour déclencher un arrêt d'extrême urgence, jusqu'à faire piler le véhicule.

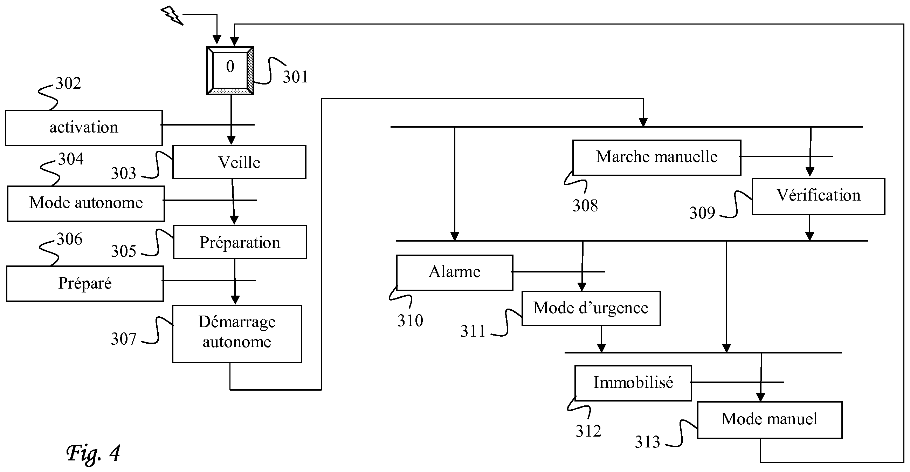

Dans le mode de mise en oeuvre de l'invention illustré par la figure 2, le module de commutation 500 est commandé par un signal 250 de sélection en provenance du module de commande automatique 1, plus particulièrement d'un bloc de supervision 300 qui héberge une machine globale à états finis expliquée à présent en référence à la figure 4.

La mise sous tension du module de commande automatique 1 positionne la machine globale dans une étape initiale 301. Dans l'étape initiale 301, le module de commande automatique 1 est dans un état endormi (sleeping).

Une transition 302 d'activation est validée lorsqu'un signal 130 en provenance d'un bloc de diagnostic 100 indique un bon état de santé de dispositifs et de moyens de contrôle surveillés en permanence par le bloc de diagnostic 100 et lorsque le module maître 20 demande cette transition.

Les dispositifs surveillés comprennent essentiellement le bus CAN 10 de communication avec le reste du véhicule, la ou les liaisons avec le module de commutation 500, les actionneurs qui effectuent le déplacement du véhicule (frein, accélération, système de direction, frein de parking assisté).

Les moyens de contrôle surveillés comprennent essentiellement ceux relatifs à l'angle de braquage (angle de braquage demandé vis-à-vis de l'angle de braquage mesuré), ceux relatifs à la vitesse (vitesse souhaitée vis-à-vis de la vitesse mesurée) et ceux relatifs à la trajectoire (trajectoire souhaitée vis-à-vis la trajectoire réelle)

En cas de dysfonctionnement constaté par le bloc de diagnostic 100 dans un des dispositifs ou des moyens de contrôle mentionnés, la machine globale déclenche un état d'exception du module de commande automatique 1, réalisé par exemple par une étape 311 expliquée plus loin dans la description.

Une validation de la transition 302 active une étape 303 de mise en veille (standby) du module de commande automatique 1. Les étapes 301 et 303 correspondent à un état de la machine globale, associé a priori au mode de fonctionnement manuel.

Une transition 304 de mode autonome est validée lorsqu'un signal 236 en provenance d'un bloc d'autorisation d'activation de contrôle automatique 200 indique que le module de commande 1 est en communication établie, par exemple par un signal 120, avec chacun des autres modules 20, 30 nécessaires au mode de fonctionnement autonome, que le véhicule est à l'arrêt, frein à main serré et si possible levier de vitesse en position neutre et lorsque le module maître 20 demande cette transition.

Les conditions de vitesse nulle du véhicule, de frein de parking assisté serré, de position neutre de la transmission et d'état prêt à démarrer du moteur vérifiées par le bloc d'autorisation d'activation de contrôle automatique 200, sont nécessaires pour pouvoir activer le contrôle autonome du véhicule. Si au moins une parmi ces conditions n'est pas satisfaite, le contrôle autonome du véhicule ne peut pas être activé.

Par ailleurs, le bloc 300 reçoit des informations en provenance du bloc d'autorisation d'activation de contrôle automatique 200 qui, en fonction de l'état du véhicule obtenu par le signal 120 et du diagnostic obtenu par un signal 12 en provenance du bloc 100, peuvent empêcher l'activation du contrôle autonome.

Une validation de la transition 304 active une étape 305 de préparation du module de commande 1 pour commencer le contrôle autonome du véhicule. L'étape 305 de préparation du module de commande 1 consiste essentiellement à envoyer le signal 250 au module de commutation 500 de façon à sélectionner les signaux de pilotage manuel 455 à 459 pour les commuter sur les signaux de pilotage des actionneurs 655 à 659, à envoyer le signal 340 au bloc de sécurisation 400 de façon à reproduire les signaux de pilotage autonome calculés 64, 74, 84, 94, 95 sur les signaux de pilotage autonome 456, 457, 458, 459, 455 et, si ce n'est déjà le cas à mettre le levier de vitesse en position neutre N.

Une transition 306 est validée lorsque le module de commande 1 est préparé et, dans l'exemple de mise en oeuvre de l'invention illustré par la figure 2, lorsque de plus un module maitre 20 envoie au bloc de supervision 300 un signal 235 de mise en fonctionnement (working) du module de commande 1 pour effectuer le contrôle autonome du véhicule. Le module maître est par exemple un calculateur qui gère les phases de vie de ceux des calculateurs qui permettent le fonctionnement du véhicule 11 bimodal.

Une validation de la transition 306 active une étape 307 de démarrage autonome qui consiste essentiellement à envoyer le signal 34 au sous-bloc 40 de contrôle/commande de façon à, en d'autres termes avec une valeur propre à, valider la transition 342 de la machine locale à états finis.

Une transition 308 est validée lorsque le module maitre 20 envoie au bloc de supervision 300 le signal 235 positionné à une valeur de mise hors fonctionnement (out of working) du module de commande 1 de façon à arrêter le contrôle autonome du véhicule, en d'autres termes à repasser en mode manuel.

Une validation de la transition 308 active une étape 309 de vérification avant passage et de mise en condition de passage en mode manuel. L'étape 309 consiste essentiellement à vérifier que la vitesse du véhicule est nulle, si possible frein hydraulique serré, et à envoyer le signal 34 au sous-bloc 40 de contrôle/commande de façon à, en d'autres termes avec une valeur propre à, valider la transition 346 de la machine locale à états finis.

Les étapes 307 et 309 correspondent à un état de la machine globale, associé au mode de fonctionnement autonome, plus précisément au mode de fonctionnement autonome normal.

Une transition 310 d'alarme est validée lorsque le module maitre 20 envoie au bloc de supervision 300, un signal 234 de requête d'arrêt d'urgence, et/ou lorsque le bloc de diagnostic 100 envoie au bloc de supervision 300, des informations de diagnostic qui peuvent déclencher un état dégradé d'Exception.

Une validation de la transition 310 à partir de l'étape 307 ou de l'étape 309 active une étape 311 qui consiste essentiellement soit, si aucune erreur interne n'est détectée, à générer le signal 340 avec une valeur qui commande au bloc 400 de transmettre au module de commutation 500 un signal de pilotage autonome d'urgence, soit, si une erreur interne est détectée, à donner la main au module maitre 20 pour demander au module 500 un signal de pilotage autonome d'urgence. Cette approche couvre la situation dans laquelle une erreur apparue empêche le sous-bloc 50 d'exercer ces fonctions. L'étape 311 en mode d'urgence correspond à un état de la machine globale, associé au mode de fonctionnement autonome, plus précisément à un mode de fonctionnement autonome anormal.

Ainsi, une commande d'arrêt d'urgence venant du maître 20 à l'extérieur du module 1, est exécutée sans retard en court-circuitant des blocs de calcul interne du module de commande. Le bloc de diagnostic 100, interne au module 1, en surveille en permanence l'état de santé de manière à pouvoir signaler des dysfonctionnements au module maitre 20 à l'extérieur et mettre le module 1 en état d'exception.

Une transition 312 est validée à la suite de l'étape 309 ou de l'étape 311 lorsque le véhicule est immobilisé, en d'autres termes lorsque la vitesse du véhicule est détectée nulle.

Une validation de la transition 312 active une étape 313 de passage en mode manuel. Dans l'étape 313, le bloc de supervision 300 positionne la valeur du signal 340 de manière à commander au sous-bloc 3 de mettre des valeurs hors intervalle de définition dans les signaux de pilotage 64, 74, 84, 94, 95. Ainsi, les sorties du module 1 sont allouées sur des valeurs fixes ou variables d'une manière qui garantit une non-interférence de mode manuel et autonome.

D'autre part, le bloc de supervision 300 positionne la valeur du signal 250 de manière à commander au module de commutation 500 de commuter les signaux 555 à 559 sur les signaux 505 à 509. On notera qu'en absence de signal 250, au cas par exemple où le module 1 est hors tension, les signaux 555 à 559 sont commutés par défaut sur les signaux 505 à 509.

L'étape 313 correspond à un état de la machine globale associé au mode de fonctionnement manuel.

Ainsi, la machine globale à états finis reçoit des ordres du module maître 20 pour séquencer le fonctionnement du module de commande 1 et la commutation des signaux de pilotage dans le module 500 pour passer du mode de conduite manuelle vers un mode de conduite automatisé ou autonome et réciproquement.

De la sorte, le fonctionnement du module de commande automatique 1 est séquencé par le module maitre 20 externe au module de commande et par le bloc de supervision 300 interne au module de commande.

Il résulte de la description donnée ci-dessus que le fonctionnement du module de commande automatique 1 est séquencé de façon à procurer au moins trois moyens sécuritaires.

Le premier moyen sécuritaire est celui de permettre de démarrer un contrôle automatique du véhicule à condition que tous les fournisseurs de données nécessaires au mode autonome soient préparés. Le contrôle automatique du véhicule 11 est utilisé notamment en mode autonome pour faire fonctionner le véhicule à partir de données en provenance d'unités de traitement numérique tels que le module maitre 20, le bus 10 de communication par exemple de type C.A.N. (acronyme de Controller Area Network), ou le module 30 de navigation/localisation sans intervention humaine.

Le deuxième moyen sécuritaire consiste à permettre de faire des passages de mode manuel vers mode autonome et vice-versa seulement quand le véhicule est en sécurité, en d'autres termes à l'arrêt dans un état stable et déterministe.

Le troisième moyen sécuritaire consiste à démarrer et arrêter le véhicule en sécurité par l'enchainement présenté dans la figure 3.

On notera que les étapes 301 à 313 et/ou 341 à 349 peuvent être considérées comme des étapes de procédé de commande mis en oeuvre au moyen d'un programme d'ordinateur installé dans le système décrit ci-dessus ou dans un autre système avec une architecture physique différente sous la seule condition d'être compatible avec le système selon l'invention.

Le module de commande automatique que nous venons de décrire pour un véhicule bimodal, permet de recevoir des trajectoires souhaitées et d'élaborer les commandes pour les actionneurs du véhicule de façon à suivre ces trajectoires en conduite autonome. Le module de commande automatique permet de répondre aux contraintes de sûreté de fonctionnement et de cout, notamment en assurant la coordination avec les autres modules qui lui sont extérieurs, en assurant la commutation des actionneurs entre le mode manuel et le mode autonome sous contrôle automatique, en assurant la coordination des opérations internes au module et en assurant au niveau global du véhicule, la sûreté de fonctionnement dans un mode autonome nominal ou normal et dans un mode autonome de secours.

## Revendications

1. Système de commande d'un véhicule comportant :
- des organes de commande humaine (5-9) générant des signaux de pilotage manuel (555-559) d'actionneurs (25-29) du véhicule ;
- un module de commande automatique (1) générant des signaux de pilotage autonome (455-459) desdits actionneurs du véhicule ;
- un module de commutation (500) agencé pour sélectionner lesdits signaux de pilotage manuel dans un mode de fonctionnement manuel et lesdits signaux de pilotage autonome dans un mode de fonctionnement autonome ;
le module de commande automatique (1) comprenant :
- un bloc (2) d'élaboration automatique d'au moins un signal de pilotage autonome calculé (64, 74, 84, 94, 95) ;
- un bloc de sécurisation (400) agencé pour transmettre au module de commutation (500) ledit au moins un signal de pilotage autonome calculé dans un cas de fonctionnement autonome normal et un signal de pilotage autonome d'urgence dans un cas de fonctionnement autonome anormal.

2. Système de commande selon la revendication 1, **caractérisé en ce que** le module de commande automatique (1) comporte un bloc de supervision (300) qui héberge une machine globale à états finis comprenant un premier état global associé au mode de fonctionnement manuel et un deuxième état global associé au mode de fonctionnement autonome de façon à envoyer au module de commutation (500) au moins un signal (250) de sélection des signaux de pilotage manuel et autonome.

3. Système de commande selon la revendication 2, **caractérisé en ce que** ladite machine globale à états finis comprend un troisième état global associé au cas de fonctionnement autonome anormal de façon à envoyer au bloc de sécurisation (400) au moins un signal (340) de freinage d'urgence.

4. Système de commande selon l'une des revendications 2 ou 3, **caractérisé en ce que** le module de commande automatique (1) comporte un bloc de diagnostic (100) agencé pour détecter tout événement associé à un cas de fonctionnement autonome anormal et pour envoyer au moins un signal (130) au bloc de supervision (300) représentatif des cas de fonctionnement autonome normal et anormal.

5. Système de commande selon l'une des revendications précédentes, **caractérisée en ce que** le bloc (2) d'élaboration automatique comporte un sous-bloc (40) de contrôle/commande qui héberge une machine locale à états finis comprenant un premier état local associé à un démarrage autonome et un deuxième état local associé à une immobilisation autonome.

6. Système de commande selon l'une des revendications précédentes, **caractérisée en ce qu'**il comporte un module (30) de navigation et/ou de localisation agencé pour envoyer en temps réel au bloc (2) d'élaboration automatique, des coordonnées de trajectoire (x*,y*,v*) exprimées dans un repère local au véhicule.

7. Procédé de commande d'un véhicule comportant :
- une ou plusieurs étapes (303, 313) de mode manuel dans laquelle ou lesquelles des organes de commande humaine génèrent des signaux de pilotage manuel d'actionneurs du véhicule ;
- une ou plusieurs étapes de mode autonome dans laquelle ou lesquelles sont générés des signaux de pilotage autonome qui sont commutés vers lesdits actionneurs du véhicule à la place des signaux de pilotage manuel ;
les étapes de mode autonome comprenant :
- une étape (307) de mode autonome normal exécutée dans un cas de fonctionnement autonome normal et dans laquelle les signaux de pilotage autonome comprennent au moins un signal de pilotage autonome calculé ;
- une étape (311) de mode autonome d'urgence exécutée dans un cas de fonctionnement autonome anormal et dans laquelle les signaux de pilotage autonome comprennent au moins un signal de pilotage autonome d'urgence.

8. Procédé de commande selon la revendication 7, **caractérisée en ce qu'**il comprend :
- au moins une première étape (343, 344, 345) pour effectuer un démarrage autonome ;
- au moins une deuxième étape (347, 348, 349) pour effectuer une immobilisation autonome.

9. Produit programme d'ordinateur **caractérisé en ce qu'**il comprend des instructions pour mettre en oeuvre le procédé selon l'une des revendications 7 ou 8 lorsqu'elles sont exécutées par un ordinateur.

10. Véhicule automobile, **caractérisé en ce qu'**il comprend un système de commande selon l'une des revendications 1 à 6 et/ou un produit programme d'ordinateur selon la revendication 9.

## Patentansprüche

1. System zur Steuerung eines Fahrzeugs, umfassend:
- Organe zur Steuerung durch einen Bediener (5-9), welche Signale zur manuellen Ansteuerung (555-559) von Aktuatoren (25-29) des Fahrzeugs erzeugen;
- ein Modul zur automatischen Steuerung (1), welches Signale zur autonomen Ansteuerung (455-459) der Aktuatoren des Fahrzeugs erzeugt;
- ein Schaltmodul (500), das dafür ausgelegt ist, die Signale zur manuellen Ansteuerung in einer manuellen Betriebsart und die Signale zur autonomen Ansteuerung in einer autonomen Betriebsart auszuwählen;
- wobei das Modul zur automatischen Steuerung (1) umfasst:
- einen Block (2) zur automatischen Erzeugung wenigstens eines berechneten Signals zur autonomen Ansteuerung (64, 74, 84, 94, 95);
- einen Sicherungsblock (400), der dafür ausgelegt ist, an das Schaltmodul (500) in einem Fall eines normalen autonomen Betriebs das wenigstens eine berechnete Signal zur autonomen Ansteuerung und in einem Fall eines anormalen autonomen Betriebs ein Signal zur autonomen Notansteuerung zu senden.

2. Steuerungssystem nach Anspruch 1, **dadurch gekennzeichnet, dass** das Modul zur automatischen Steuerung (1) einen Überwachungsblock (300) aufweist, welcher eine globale Zustandsmaschine beinhaltet, die einen ersten globalen Zustand, welcher der manuellen Betriebsart zugeordnet ist, und einen zweiten globalen Zustand, welcher der autonomen Betriebsart zugeordnet ist, umfasst, um an das Schaltmodul (500) wenigstens ein Signal (250) zur Auswahl der Signale zur manuellen und autonomen Ansteuerung zu senden.

3. Steuerungssystem nach Anspruch 2, **dadurch gekennzeichnet, dass** die globale Zustandsmaschine einen dritten globalen Zustand umfasst, welcher dem Fall des anormalen autonomen Betriebs zugeordnet ist, um an den Sicherungsblock (400) wenigstens ein Notbremssignal (340) zu senden.

4. Steuerungssystem nach einem der Ansprüche 2 oder 3, **dadurch gekennzeichnet, dass** das Modul zur automatischen Steuerung (1) einen Diagnoseblock (100) aufweist, der dafür ausgelegt ist, jedes Ereignis zu erkennen, das einem Fall des anormalen autonomen Betriebs zugeordnet ist, und wenigstens ein Signal (130) an den Überwachungsblock (300) zu senden, das für die Fälle des normalen und anormalen autonomen Betriebs repräsentativ ist.

5. Steuerungssystem nach einem der vorhergehenden Ansprüche, **dadurch gekennzeichnet, dass** der Block (2) zur automatischen Erzeugung einen Unterblock (40) zur Kontrolle/Steuerung aufweist, welcher eine lokale Zustandsmaschine beinhaltet, die einen ersten lokalen Zustand, welcher einem autonomen Starten zugeordnet ist, und einen zweiten lokalen Zustand, welcher einem autonomen Anhalten zugeordnet ist, umfasst.

6. Steuerungssystem nach einem der vorhergehenden Ansprüche, **dadurch gekennzeichnet, dass** es ein Modul (30) zur Navigation und/oder Ortsbestimmung aufweist, das dafür ausgelegt ist, in Echtzeit an den Block (2) zur automatischen Erzeugung Trajektorien-Koordinaten (x*, y*, v*) zu senden, die in einem bezüglich des Fahrzeugs lokalen Koordinatensystem ausgedrückt sind.

7. Verfahren zur Steuerung eines Fahrzeugs, umfassend:
- einen oder mehrere Schritte (303, 313) einer manuellen Betriebsart, in dem oder in denen Organe zur Steuerung durch einen Bediener Signale zur manuellen Ansteuerung von Aktuatoren des Fahrzeugs erzeugen;
- einen oder mehrere Schritte einer autonomen Betriebsart, in dem oder in denen Signale zur autonomen Ansteuerung erzeugt werden, welche anstelle der Signale zur manuellen Ansteuerung zu den Aktuatoren des Fahrzeugs durchgeschaltet werden;
wobei die Schritte einer autonomen Betriebsart umfassen:
- einen Schritt (307) einer normalen autonomen Betriebsart, der in einem Fall eines normalen autonomen Betriebs ausgeführt wird und in welchem die Signale zur autonomen Ansteuerung wenigstens ein berechnetes Signal zur autonomen Ansteuerung umfassen;
- einen Schritt (311) einer autonomen Notbetriebsart, der in einem Fall eines anormalen autonomen Betriebs ausgeführt wird und in welchem die Signale zur autonomen Ansteuerung wenigstens ein Signal zur autonomen Notansteuerung umfassen.

8. Steuerungsverfahren nach Anspruch 7, **dadurch gekennzeichnet, dass** es umfasst:
- wenigstens einen ersten Schritt (343, 344, 345) zum Durchführen eines autonomen Startens;
- wenigstens einen zweiten Schritt (347, 348, 349) zum Durchführen eines autonomen Anhaltens.

9. Computerprogrammprodukt, **dadurch gekennzeichnet, dass** es Anweisungen zur Durchführung des Verfahrens nach einem der Ansprüche 7 oder 8, wenn sie von einem Computer ausgeführt werden, umfasst.

10. Kraftfahrzeug, **dadurch gekennzeichnet, dass** es ein Steuerungssystem nach einem der Ansprüche 1 bis 6 und/oder ein Computerprogrammprodukt nach Anspruch 9 umfasst.

## Claims

1. Vehicle control system comprising:
- human-control members (5-9) generating manual-driving signals (555-559) for manually driving actuators (25-29) of the vehicle;
- an automatic-control module (1) generating autonomous-driving signals (455-459) for autonomously driving said actuators of the vehicle;
- a switching module (500) designed to select said manual-driving signals in a manual mode of operation and said autonomous-driving signals in an autonomous mode of operation;
the automatic-control module (1) comprising:
- an automatic-formulation unit (2) that automatically formulates at least one calculated autonomous-driving signal (64, 74, 84, 94, 95);
- a safety unit (400) designed to transmit to the switching module (500) said at least one calculated autonomous-driving signal in the case of normal autonomous operation and an emergency autonomous-driving signal in the case of abnormal autonomous operation.

2. Control system according to Claim 1, **characterized in that** the automatic-control module (1) comprises a supervision unit (300) which houses an overall finite state machine comprising a first overall state associated with the manual mode of operation and a second overall state associated with the autonomous mode of operation so as to send the switching module (500) at least one signal (250) for selecting manual-driving and autonomous-driving signals.

3. Control system according to Claim 2, **characterized in that** said overall finite state machine comprises a third overall state associated with the case of abnormal autonomous operation so as to send the safety unit (400) at least one emergency braking signal (340).

4. Control system according to either of Claims 2 and 3, **characterized in that** the automatic-control module (1) comprises a diagnostics unit (100) designed to detect any event associated with a case of abnormal autonomous operation and to send the supervision unit (300) at least one signal (130) indicative of the cases of normal and abnormal autonomous operation.

5. Control system according to one of the preceding claims, **characterized in that** the automatic-formulation unit (2) comprises a command/control subunit (40) which houses a local finite state machine comprising a first local state associated with an autonomous start and a second local state associated with an autonomous immobilization.

6. Control system according to one of the preceding claims, **characterized in that** it comprises a navigation and/or location module (30) designed to send the automatic-formulation unit (2), in real time, course coordinates (x*, y*, v*) which are expressed in a frame of reference local to the vehicle.

7. Method for controlling a vehicle comprising:
- one or more manual-mode steps (303, 313) in which human-control members generate manual-driving signals for manually driving actuators of the vehicle;
- one or more autonomous-mode steps in which autonomous-driving signals are generated and switched toward said actuators of the vehicle in place of the manual-driving signals;
the autonomous-mode steps comprising:
- a normal autonomous-mode step (307) performed in the case of normal autonomous operation and in which the autonomous-driving signals comprise at least one calculated autonomous-driving signal;
- an emergency autonomous-mode step (311) performed in the case of abnormal autonomous operation and in which the autonomous-driving signals comprise at least one emergency autonomous-driving signal.

8. Control method according to Claim 7, **characterized in that** it comprises:
- at least one first step (343, 344, 345) for performing an autonomous start;
- at least one second step (347, 348, 349) for performing an autonomous immobilization.

9. Computer program product, **characterized in that** it comprises instructions for implementing the method according to either of Claims 7 and 8 when they are performed by a computer.

10. Motor vehicle, **characterized in that** it comprises a control system according to one of Claims 1 to 6 and/or a computer program product according to Claim 9.
